# EUROPÄISCHE PATENTSCHRIFT

(11) **EP 2 619 021 B1**
(45) Veröffentlichungstag und Bekanntmachung des Hinweises auf die Patenterteilung: **07.09.2016**
(21) Anmeldenummer: 11767918.3
(22) Anmeldetag: 22.09.2011
(51) Int. Cl.: B60G 17/016, B60G 17/0195, B60W 30/02, B62D 9/02, B60W 10/20, B60W 10/22

(54) **VERFAHREN ZUM EINSTELLEN DER RÄUMLICHEN LAGE DER WANKACHSE EINES KRAFTWAGENS**
METHOD FOR ADJUSTING THE SPATIAL POSITION OF THE ROLLING AXIS OF A MOTOR VEHICLE
PROCÉDÉ DE RÉGLAGE DE LA POSITION SPATIALE DE L'AXE DE ROULIS D'UN VÉHICULE AUTOMOBILE

(30) Priorität: 23.09.2010 DE 102010046317
(43) Veröffentlichungstag der Anmeldung: 31.07.2013
(73) Patentinhaber: Audi AG, 85045 Ingolstadt (DE)
(72) Erfinder: MEITINGER, Karl-Heinz, 81667 München (DE); BÄR, Michael, 85049 Ingolstadt (DE)
(86) Internationale Anmeldenummer: PCT/EP2011/004738
(87) Internationale Veröffentlichungsnummer: WO 2012/038082

(56) Entgegenhaltungen:
- EP-A2- 2 020 313
- WO-A2-2009/053075
- DE-A1- 10 060 536
- DE-A1- 19 648 497
- FR-A1- 2 924 053
- US-A1- 2005 197 746

## Beschreibung

Die Erfindung betrifft ein Verfahren zum Einstellen der räumlichen Lage der Wankachse eines Kraftwagens.

Unter dem Begriff Active Body Control (ABC) sind Kraftfahrzeuge mit aktiven Federungssystemen bzw. Stabilisatoren bekannt, deren steuerbare Fahrwerkseigenschaften einen gezielten Ausgleich von Nick- und Wankbewegungen ermöglicht. Üblicherweise lässt sich hierzu die vertikale Position eines jeden Rades elektrohydraulisch verstellen. Hierdurch lassen sich die Fahreigenschaften eines Kraftwagens insbesondere bei Kurvenfahrt verbessern, z. B. indem sich der Kraftwagen aktiv in die Kurve legt.

Aus der deutschen Patentanmeldung 102009014747.0-21 vom 25.03.2009 ist ein Verfahren zur Ansteuerung von Aktoren eines aktiven Federungssystems bekannt, mithilfe dessen sich der Wankwinkel eines Kraftfahrzeugs gezielt beeinflussen lässt. Die einzelnen Aktoren, die die vertikale Radstellung der einzelnen Räder bestimmen, werden so angesteuert, dass eine Wankbewegung des Fahrzeugs zur Kurveninnenseite erzeugt wird. Im Falle einer teil- oder vollautomatischen Fahrzeugführung wird die auf die Fahrzeuginsassen wirkende Querkraft automatisch so reduziert, dass sich ein komfortables Fahrgefühl einstellt. Mittels einer Streckenvorausschau in der automatischen Fahrt lässt sich hierbei die Querbeschleunigung vorausberechnen und die Wankbewegung des Fahrzeugs entsprechend anpassen.

Aus der DE 10 2004 040 876 A1 ist ein Verfahren zur Regelung der Fahrdynamik eines Fahrzeugs bekannt, bei dem die Fahrzeugdrehung um dessen Hochachse beeinflusst wird, indem die Wankmomentverteilung erfasst und verändert wird. Die Wankmomentverteilung kann durch verstellbare Dämpfer an den Rädern des Fahrzeugs geregelt werden. Ein aktives Einstellens eines Wankwinkels und einer Querführung des Fahrzeugs erfolgt dabei nicht.

Die DE 10 2007 051 218 A1 und die DE 10 2006 042 961 A1 beschreiben Verfahren, mit denen sich entweder die Wankrate oder die Lagen variabler Wank-, Nick- und Gierachsen eines Fahrzeugs berechnen lassen. Die Wankachse bildet sich passiv aus und wird nur in der Berechnung berücksichtigt. Insbesondere erfolgt kein aktives Einstellen der Wankachse.

Die DE 10 2005 048 718 A9 beschreibt ein Fahrzeugdynamiksteuersystem, mit dem der momentane Wankzustand in Abhängigkeit zusätzlicher Massen (z. B. Dachlast) am Fahrzeug bestimmt werden kann. Das Wankverhalten des Fahrzeugs kann beeinflusst werden, um z. B. ein mögliches Überschlagen des Fahrzeugs zu verhindern.

Aus der DE 199 18 597 C2 und der DE 10 2006 033 635 A1 sind Verfahren bekannt, mit Hilfe derer sich ein Fahrzeug stabilisieren lässt, indem über Aktuatoren in die Lenkung eingegriffen wird.

Die EP2 020 313 A2 offenbart eine aktive Dämpfereinrichtung eines Fahrzeugs mit einer Mehrzahl von Aktoren, welche jeweils zwischen einem Rad und einem Aufbau des Fahrzeugs angeordnet werden und individuell eine Steuerkraft aufbringen können. Es ist eine Steuereinheit vorgesehen, welche eine Verhaltensänderung des Fahrzeugs steuert, in dem sie jede Steuerkraft des jeweiligen Aktors steuert. Dabei gibt die Steuereinheit eine virtuelle Steuerlinie vor, welche in Abhängigkeit von einem Fahrzustand des Fahrzeugs verändert wird. Die Steuereinheit steuert das Fahrzeugverhalten derart, dass eine Abweichung des Fahrzeugs bzw. seines Verhaltens bezüglich der virtuellen Steuerlinie klein wird.

Der US 2005/0197746 A1 ist ein Verfahren zum Steuern der Fahrstabilität eines Fahrzeugs als bekannt zu entnehmen, wobei ermittelt wird, ob sich eine Kurve vor dem Fahrzeug befindet. Nähert sich das Fahrzeug der Kurve, so wird eine voraussichtliche, inhärente Trajektorie des Fahrzeugs ermittelt. Ferner wird eine bevorzugte und vorgebbare Soll-Trajektorie ermittelt. Die inhärente Trajektorie wird mit der Soll-Trajektorie verglichen, woraufhin eine Abweichung der inhärenten Trajektorie von der Soll-Trajektorie bestimmt wird. Um die Abweichung zu korrigieren oder zu kompensieren, wird eine Wankmomentenaufteilung bestimmt und verändert, indem ein vorderer, aktiver Stabilisator und ein hinterer, aktiver Stabilisator angesteuert werden.

Aus der DE 196 48 497 ist ein Lenkunterstützungssystem für Fahrzeuge bekannt, welches ein Lenksystem zum Lenken eines Fahrzeugs, eine Betätigungseinrichtung zum Anlegen eines Lenkdrehmoments an das Lenksystem, ein tatsächliche-Richtung-Erfassungsmittel zum Erfassen einer tatsächlichen Fahrtrichtung des Fahrzeugs, ein Sollrichtungserfassungsmittel zum Erfassen einer tangentialen Richtung einer Straße, auf welcher das Fahrzeug fährt, und ein Steuer/Regel-Mittel zum Steuern/Regeln der Betätigungseinrichtung umfasst, um ein gesteuertes/geregeltes Lenkdrehmoment zu erzeugen, welches dazu neigt, eine Abweichung der tatsächlichen Fahrtrichtung des Fahrzeugs von der Straßentangentialrichtung zu verringern.

Ferner offenbart die FR 2 924 053 A1 ein Verfahren zum Betreiben einer Antiwankeinrichtung eines Fahrzeugs, um Wankbewegungen des Fahrzeugs bei einer Kurvenfahrt zumindest gering zu halten.

Die WO 2009/053075 A2 offenbart ein Verfahren zur Erzeugung von Signalen zur Beeinflussung der Bewegung eines in seinen Bewegungsabläufen steuerbaren oder regelbaren Fahrzeugaufbaus eines Kraftfahrzeugs, wobei sensorisch die Bewegungen des Fahrzeugaufbaus ermittelt wird. Die den ermittelten Sensorwerten entsprechenden Sensorsignale werden einem Dämpferregler zugeführt. Der Dämpferregler liefert wenigstens ein Steuersignal zur Ansteuerung von Aktuatoren, insbesondere semi-aktiven oder aktiven Dämpfern, mittels denen die Bewegung des Fahrzeugaufbaus beeinflusst werden kann.

Dabei ist vorgesehen, dass mittels des Dämpferreglers aus den Sensorsignalen eine Hub-, und/oder Wank- und/oder Nickbewegung des Fahrzeugaufbaus um einen Punkt des Fahrzeugaufbaus beeinflusst wird, wobei der Dämpferregler den Punkt variabel in Abhängigkeit der Bewegung des Fahrzeugaufbaus festlegt.

Schließlich ist aus der DE 100 60 536 A1 ein Verfahren zur Steuerung des Fahrwerksystems eines zweispurigen Kraftfahrzeugs bekannt, wobei mit Hilfe eines Navigationssystems die aktuelle Fahrzeug-Position bezüglich einer bekannten Fahrstrecke erkannt wird und veränderbare Komponenten des Fahrwerksystems dem vorhersehbaren Streckenverlauf angepasst eingestellt werden. Dabei ist vorgesehen, dass der Wankwinkel des FahrzeugAufbaus gegenüber den Fahrzeug-Rädern oder Radträgern des Kraftfahrzeugs insbesondere hinsichtlich einer bevorstehenden Kurvenfahrt eingestellt wird, indem die Abstützpunkte der Radträger-Federbeine oder Radträger-Dämpfer am Fahrzeug-Aufbau im Wesentlichen in Vertikalrichtung verlagert werden.

Es ist Aufgabe der Erfindung, ein Verfahren bereitzustellen, mit dem sich die räumliche Lage der Wankachse eines Kraftwagens flexibler einstellen und der Fahrkomfort für die Insassen des Kraftwagens verbessern lässt.

Diese Aufgabe wird durch ein Verfahren mit den Merkmalen des Patentanspruchs 1 gelöst.

Mit dem erfindungsgemäßen Verfahren lässt sich die räumliche Lage der Wankachse eines Kraftwagens einstellen. Unter der Wankachse ist eine Längsachse des Kraftwagens zu verstehen, welche eine Drehachse für eine zumindest teilweise Drehbewegung des Kraftwagens darstellt. Solche Drehbewegungen, die auch als Rollen bezeichnet werden, treten insbesondere bei Kurvenfahrten des Kraftwagens auf, bei denen Querbeschleunigungen aufgrund der Zentrifugalkraft ein Drehen bzw. Neigen des Kraftwagens bewirken. Das erfindungsgemäße Verfahren umfasst mehrere Verfahrensschritte:
a) Es wird eine räumliche Solllage für die Wankachse vorgegeben. Diese Solllage kann insbesondere so gewählt werden, dass sich bei einer Drehung des Kraftwagens um die Wankachse für die Insassen des Kraftwagens ein besonders angenehmes und weitestgehend ungestörtes Fahrempfinden ergibt. Dies ist insbesondere dann der Fall, wenn die auf die Insassen wirkenden effektiven Querbeschleunigungen zumindest teilweise kompensiert werden. Die räumliche Solllage der Wankachse kann insbesondere von der räumlichen Lage der Wankachse abweichen, die dem Fahrzeug ohne steuernde Einflüsse bereits durch seine bauliche Ausgestaltung zu eigen ist. Befinden sich mehrere Personen im Fahrzeug, kann die Solllage der Wankachse so gewählt werden, dass sich für alle Personen im Mittel ein besonders angenehmes Fahrgefühl ergibt. Insbesondere kann die räumliche Solllage für die Wankachse in Abhängigkeit von der Anzahl und/oder der Position der Fahrzeuginsassen vorgegeben werden.
b) Es wird eine Querbeschleunigung des Kraftwagens bestimmt. Die Bestimmung kann beispielsweise dadurch erfolgen, dass die aktuelle bzw. momentan auftretende Querbeschleunigung messtechnisch erfasst wird. Es kann jedoch auch vorgesehen sein, dass die Querbeschleunigung des Kraftwagens für einen in der Zukunft liegenden Zeitpunkt vorausbestimmt wird. Dies kann beispielsweise mit Hilfe geeigneter Fahrzeugmodelle durch Berechnung und/oder im Rahmen einer bereitgestellten Streckenvorausschau geschehen. Es kann auch eine zu erwartende Querbeschleunigung mit Hilfe vorhandener Daten geschätzt werden.
c) Um eine Verlagerung der Wankachse in die in Schritt a) bestimmte Solllage zu bewirken wird eine Sollquerneigung des Kraftwagens festgelegt und eine Sollquerablage des Kraftwagens ermittelt. Es kann insbesondere auch ein Sollquerneigungsverlauf festgelegt werden. Dies geschieht in Abhängigkeit von der in Schritt b) bestimmten Querbeschleunigung. Werden die so festgelegte bzw. ermittelte Sollquerneigung bzw. Sollquerablage eingestellt, kommt es zu einer Verlagerung der Wankachse in die Solllage. Unter Querneigung ist die Drehung des Kraftwagens um die Wankachse zu verstehen. Ohne Querbeschleunigungen auf den Kraftwagen hat dieser einen Querneigungswinkel von 0°. Treten dagegen Querbeschleunigungen am Kraftwagen auf, ist dieser Querneigungswinkel in der Regel von 0° verschieden. Über die Querablage ist ein tatsächlicher Kurs definiert, auf dem sich der Kraftwagen fortbewegt, und der parallel versetzt zum ursprünglich gefahrenen Sollkurs verläuft. Der Abstand der ursprünglichen Trajektorie zur tatsächlichen Trajektorie ist dann durch die Querablage gegeben. Ein Kraftwagen kann durch eine Querbewegung gegenüber der geplanten Trajektorie in eine Bewegung entlang der neuen Trajektorie übergehen. Die Querablage kann auch als Querversatz der neuen Trajektorie gegenüber der ursprünglichen Trajektorie bezeichnet werden. In Schritt c) des Verfahrens werden Änderungen der Querneigung und der Querablage des Kraftwagens also insbesondere so festgelegt, dass diese beiden Parameter gemeinsam ein Verschieben der Wankachse in die Solllage bewirken. Querablage und Querneigung sind dabei Funktionen der Querbeschleunigung. Der funktionale Zusammenhang kann beispielsweise durch abgelegte Kennlinien oder mathematische Gleichungen gegeben sein.
d) Im letzten Verfahrensschritt werden Aktoren so eingestellt, dass sich die in Schritt c) ermittelte Sollquerneigung und Sollquerablage ergeben. Damit der Kraftwagen die ermittelte Sollquerneigung einnimmt, werden Aktoren einer aktiven Fahrwerksvorrichtung eingestellt; die Sollquerablage des Kraftwagens wird dagegen dadurch eingenommen, dass wenigstens ein Aktor eingestellt wird, welcher zum Beeinflussen der Querbewegung des Kraftwagens dient. Bei den Aktoren der aktiven Fahrwerksvorrichtung kann es sich insbesondere um elektrohydraulische Stellvorrichtungen handeln, welche an den einzelnen Rädern des Kraftwagens angreifen und deren Vertikalposition steuern. Die aktive Fahrwerksvorrichtung kann ein aktives Federungssystem, z. B. ein Active Body Control System und/oder ein System mit aktiven Stabilisatoren sein. Die einzelnen Aktoren der jeweiligen Räder lassen sich insbesondere so ansteuern, dass nur bestimmte Räder angehoben bzw. abgesenkt werden, so dass sich die vorgegebene Sollquerneigung des gesamten Kraftwagens einstellt.

Nach dem Stand der Technik ist ein flexibles Einstellen der räumlichen Lage der Wankachse nicht möglich. Insbesondere kann die Achse, um die das Fahrzeug aktiv wankt, durch die Vertikalaktoren nicht frei bestimmt werden. Eine Verschiebung in eine beliebige Richtung ist nicht ohne weiteres möglich. Die Wankachse kann folglich in der Regel nicht in den optimalen Punkt gelegt werden, bei dem sich ein für das Fahrempfinden von Kraftfahrzeugsinsassen optimales Ergebnis erzielen lässt. Mit dem vorgestellten Verfahren wird sowohl die Querneigung als auch die Querablage des Kraftwagens so eingestellt, dass die Wankachse in eine vorgebbare Solllage verschoben werden kann. Die Solllage kann hierbei sehr flexibel vorgegeben werden, so dass sich insbesondere für die Fahrzeuginsassen ein sehr angenehmes Fahrempfinden ergibt. Damit lässt sich ein sehr bedarfsgerechtes und effizientes Verschieben der Wankachse auf unkomplizierte Art und Weise erreichen. Insbesondere wenn das Fahrzeug eine gezielte Querbewegung ausführt, lässt sich die Wankachse nach oben verschieben. Die notwendige Querbewegung bzw. Querablage kann beispielsweise von einem Kompensationssystem berechnet werden und an die entsprechenden Aktoren zur automatischen Fahrzeugführung übermittelt werden. Mit dem Verfahren kann erreicht werden, dass sich ein Kraftwagen aktiv in eine gefahrene Kurve neigt. Die auf die Fahrzeuginsassen unangenehm wirkenden Querbeschleunigungen lassen sich so reduzieren. Der Fahrkomfort steigt subjektiv erheblich. Das Wanken findet dabei nicht zwangsläufig um die bauartbedingt vorgegebene Wankachse des Kraftwagens statt, sondern diese Wankachse kann durch ein Zusammenwirken der aktiv eingestellten Querneigung und Querbewegung gezielt verschoben werden. Durch das Beeinflussen der Querbewegung des Kraftwagens kann insbesondere auch der Stellweg der einzelnen Aktoren der aktiven Fahrwerksvorrichtung besser ausgenutzt werden, so dass insbesondere weniger Stellweg benötigt wird.

Vorzugsweise erfolgt in Schritt d) des Verfahrens das Einstellen der Querbewegung des Kraftwagens über einen Eingriff in eine Lenkvorrichtung des Kraftwagens. Insbesondere kann über einen Lenkaktor aktiv in die Lenkbewegung des Kraftwagens eingegriffen werden. Beispielsweise stellt ein geeignet ausgebildetes System zur Fahrzeugführung die zusätzliche Querablage über eine Lenkbewegung ein, welche durch einen aktiven Lenkaktor ausgeführt wird. Bei dieser Ausführungsform lässt sich die Querbewegung des Kraftwagens besonders einfach und unkompliziert einstellen, da für die Beeinflussung der Querbewegung ein üblicherweise sowieso vorhandenes Lenksystem des Kraftwagens verwendet und nur durch zusätzliche Aktoren zum aktiven Lenkeingriff ergänzt wird.

Vorzugsweise ist in Verfahrensschritt a) die Solllage der Wankachse so vorgegeben, dass die Wankachse zumindest abschnittsweise in einen Bereich fällt, der von einem Fahrzeugführer zum Führen des Fahrzeugs eingenommen wird. Der Fahrer eines Kraftwagens sitzt in der Regel an einer fest vorgegebenen Position im Kraftwagen, aus der eine Bedienung unterschiedlichster Vorrichtungen zum Führen des Fahrzeugs (z. B. Gaspedal, Lenkrad usw.) leicht möglich ist. Dieser Bereich ist beispielsweise durch einen Sitz für den Fahrer vorgegeben. Es ist von Vorteil, die Wankachse genau so zu verschieben, dass sie unter dem Fahrer bzw. Fahrersitz zu liegen kommt oder durch einen anderen Bereich verläuft, in dem sich der Fahrer üblicherweise beim Führen des Fahrzeugs aufhält. Diese räumliche Nähe des Fahrers zur Wankachse garantiert dann, dass das Komfortempfinden des Fahrers erhöht wird. Der subjektive Fahrkomfort für den Fahrer wird extrem verbessert. Wird das Verfahren beispielsweise im Rahmen einer vollautomatischen Fahrzeugführung eingesetzt, kann der Fahrzeugführer problemlos nicht mit dem Führen des Fahrzeugs zusammenhängende Tätigkeiten (z. B. Lesen eines Buches) ausführen, ohne dass medizinisch nachteilige Begleiterscheinungen (z. B. Übelkeit, Schwindel usw.) verstärkt auftreten. Im Rahmen der vollautomatischen Fahrt benötigt der Fahrzeugführer die Informationen über die Querbeschleunigung nicht, die sich sonst (ohne Wanken) aus dem subjektiven Fahreindruck erschließen. Die Notwendigkeit einer haptischen Rückmeldung entfällt und die Wankachse wird so gelegt, dass sich für den Fahrer ein optimaler subjektiver Fahreindruck ergibt. Dies ist insbesondere dann der Fall, wenn die Wankachse so verschoben wird, dass sie durch den Bereich des Kopfs oder des Rumpfs oder der aus dem Achterbahnbau bekannten Herzlinie des Fahrers verläuft.

Weiterhin ist es bevorzugt, wenn die in Schritt a) vorgegebene Solllage der Wankachse zumindest abschnittsweise von einer Fahrbahn weiter entfernt liegt als dies für die Lage der Wankachse im Ruhezustand des Kraftwagens der Fall ist. Die Wankachse wird in diesem Fall im Rahmen des Verfahrens höher über die Fahrbahn gelegt. Durch diesen zusätzlichen Freiheitsgrad im Verschieben der Wankachse kann das Komfortempfinden für die Passagiere im Kraftwagen weiter verbessert werden.

Vorzugsweise wird in Schritt b) eine zukünftige Querbeschleunigung des Kraftwagens über eine Vorrichtung zur automatischen Streckenvorausschau bestimmt und in Schritt c) sowohl die Sollquerneigung als auch die Soliquerablage des Kraftwagens über diese Vorrichtung festgelegt. Für die automatische Streckenvorausschau können verschiedenste Eingangsparameter berücksichtigt werden. Beispielsweise kann anhand der momentanen Geschwindigkeit des Kraftwagens und dem aktuellen Lenkeinschlagswinkel die jeweilige Querbeschleunigung bestimmt werden. Es können auch Kartendaten vorliegen, aus denen der Fahrbahnverlauf hervorgeht. Dann kann beispielsweise über einen Satellitensignalsensor (z. B. GPS [Global Positioning System]-Sensor) die momentane Fahrzeugposition ermittelt werden und auf Basis des Kartenmaterials die zu erwartende Querbeschleunigung über die im Fahrzeugvorfeld liegenden Kurven bestimmt werden. Auch von einer Umfeldsensorik (z. B. Videokamera, Ultraschallsensoren etc.) gewonnene Daten können für die Streckenvorausschau herangezogen werden. Auch Daten zur Fahrbahnneigung können wichtige Eingangsparameter sein, um die zu erwartende Querbeschleunigung zu ermitteln. Zusätzlich können auch der Lenkwinkel und die Fahrzeuggeschwindigkeit für die Bestimmung der aktuellen Querbeschleunigung ermittelt werden. Mit einer solchen Vorrichtung zur automatischen Streckenvorausschau kann die Wankachse nicht erst in Reaktion auf eine aktuelle und zunächst zu messende Querbeschleunigung eingestellt werden, sondern die zu erwartenden Querbeschleunigungen können schon ermittelt werden, bevor sie überhaupt auftreten. Auf diese Weise kann die räumliche Lage der Wankachse schnell und ohne zeitlichen Verzug den jeweiligen Bedingungen optimal angepasst werden. Die Querneigung und Querbewegung des Kraftwagens lassen sich so noch fließender und weniger abrupt einstellen, so dass der Fahrkomfort für die Kraftfahrzeuginsassen noch weiter erhöht wird.

Vorzugsweise kann für das Bestimmen der Querbeschleunigung in Verfahrensschritt b) auch ein Signal wenigstens eines Sensors herangezogen werden. Bei dem Sensor kann es sich insbesondere um einen Beschleunigungssensor (g-Sensor) handeln, der die jeweils momentane Querbeschleunigung misst. Bei dem Sensor kann es sich jedoch z. B. auch um eine Kamera handeln, die eine Kurve im Fahrzeugvorfeld erfasst und diese Information zur Bestimmung der zu erwartenden Querbeschleunigung verwertet. Der Sensor kann beispielsweise auch ein Laserscanner sein, welcher am Fahrzeug angebracht ist und Fahrbahneigenschaften (z. B. Fahrbahnneigung) erfasst. Solche Sensoren erlauben eine besonders exakte Bestimmung der jeweiligen Querbeschleunigung und folglich eine besonders präzise Einstellung der räumlichen Lage der Wankachse.

Besonders bevorzugt ist es, wenn in Schritt d) der wenigstens eine Aktor zum Beeinflussen der Querneigung des Kraftwagens in einem aktiven Federungssystem oder in einem aktiven Stabilisator bereitgestellt wird. Solche Federungs- bzw. Stabilisatorsysteme erlauben eine besonders dynamische Regelung der Fahrzeugneigung und ermöglichen eine schnelle und bedarfsgerechte Anpassung an die jeweilige Situation.

Weiterhin ist es besonders bevorzugt, dass das erfindungsgemäße Verfahren im Rahmen einer insbesondere vollautomatischen Fahrzeugführung ausgeführt wird. Im Rahmen einer teilautomatischen Fahrzeugführung wird eine Vielzahl fahrrelevanter Bedienvorgänge nicht mehr durch den Fahrzeugführer selbst sondern durch Systeme des Kraftwagens ausgeführt. Der Fahrzeugführer greift nur noch ab und zu korrigierend ein. Bei der vollautomatischen Fahrzeugführung fährt der Kraftwagen innerhalb einer Strecke selbsttätig, ohne dass ein steuernder Eingriff des Fahrzeugführers erforderlich wäre. Insbesondere kann der Kraftwagen teilautonom agieren. Der Fahrzeugführer handelt dann bestenfalls noch überwachend und kann sich die meiste Zeit Tätigkeiten widmen, die nicht mit dem Führen des Fahrzeugs zusammenhängen. Das subjektive Empfinden der Querbeschleunigungen ist dann für ein sicheres Führen des Fahrzeugs nicht mehr erforderlich, sondern wirkt gegebenenfalls sogar störend. In diesem Fall erlaubt ein flexibles Verschieben der räumlichen Lage der Wankachse, die auf einen Fahrzeuginsassen wirkenden Querbeschleunigungen besonders effektiv zu minimieren und so den subjektiven Fahrkomfort zu erhöhen.

Weitere Merkmale der Erfindung ergeben sich aus den Ansprüchen, den Figuren und der Figurenbeschreibung. Die vorstehend in der Beschreibung genannten Merkmale und Merkmalskombinationen als auch die in der Figurenbeschreibung genannten Merkmale und Merkmalskombinationen und/oder die in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Anhand von Ausführungsbeispielen wird die Erfindung im Folgenden näher erläutert. Es zeigen:
- Fig. 1: eine schematische Aufsicht auf einen Kraftwagen mit einer aktiven Fahrwerksvorrichtung sowie einem Aktor zum Beeinflussen der Lenkbewegung;
- Fig. 2: eine schematische Rückansicht eines Kraftwagens mit einer konventionell liegenden Wankachse;
- Fig. 3: eine schematische Rückansicht eines Kraftwagens in einer Ausgangsstellung sowie in einer hierzu querversetzten Stellung, in der der Kraftwagen geneigt und die Wankachse lateral verschoben ist;
- Fig. 4: eine schematische Aufsicht auf einen Kraftwagen, welcher auf einer Fahrbahn eine Querbewegung ausführt, so dass sich eine definierte Querablage einstellt; und
- Fig. 5: ein Blockschaltbild für das Zusammenwirken der für das Verfahren erforderlichen Komponenten gemäß einer speziellen Ausführungsform.

In den Figuren sind gleiche oder funktionsgleiche Elemente mit den gleichen Bezugszeichen versehen.

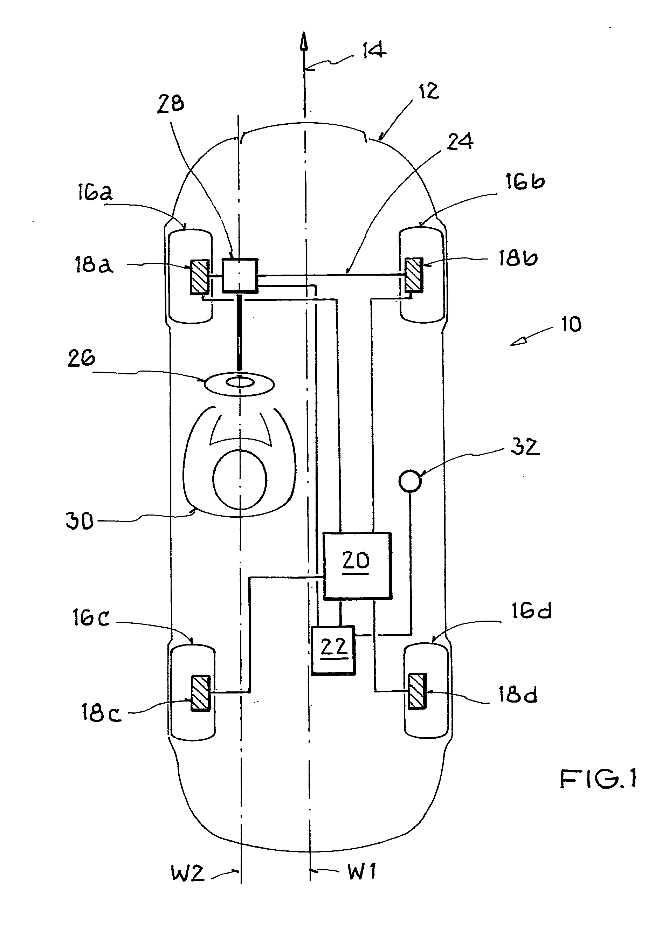

Fig. 1 zeigt einen Kraftwagen 10, der sich in einer durch den Pfeil 14 angegebenen Fahrtrichtung bewegt. In der Nähe seiner Frontseite 12 umfasst er zwei vordere Räder 16a und 16b. Diese sind über eine Vorderachse 24 miteinander verbunden. Der Kraftwagen 10 umfasst auch zwei hintere Räder 16c und 16d. Jedem der Räder 16a bis 16d ist jeweils ein Vertikalaktor 18a bis 18d zugeordnet, welche Teil einer ABC (Active Body Control)-Aktorik 36 sind. Die Vertikalaktoren 18a bis 18d werden über eine ABC-Steuereinheit 20 angesteuert. Hierdurch ist es möglich, den Hub jedes einzelnen Rades individuell einzustellen. Beispielsweise kann der Vertikalaktor 18a die vertikale Radstellung des Rades 16a beeinflussen. Die ABC-Steuereinheit 20 ist mit einer Steuereinheit 22 verbunden, welche eine teilautomatische oder vollautomatische Fahrzeugführung regelt. Alternativ können die ABC-Steuereinheit 20 sowie die Steuereinheit 22 auch Teil einer gemeinsamen Steuereinheit sein. Der Kraftwagen 10 umfasst auch einen Sensor 32, der es erlaubt, die momentane Querbeschleunigung des Kraftwagens 10 zu messen. Der Sensor 32 ist mit der Steuereinheit 22 verbunden und gibt die Messinformationen zur Querbeschleunigung an diese weiter.

Die vorderen Räder 16a und 16b sind über eine Lenkung 26 lenkbar, d. h. der Radlenkwinkel ist über die Lenkung 26 einstellbar. Die Lenkung 26 umfasst insbesondere ein Lenkrad, das von einem Fahrer 30 bedient werden kann. Neben dieser Form der manuellen Lenkung umfasst der Kraftwagen 10 auch einen Lenkaktor 28, mit dem der Radlenkwinkel der Räder 16a und 16b automatisch eingestellt werden kann. Hierzu ist der Lenkaktor 28 mit der Steuereinheit 22 verbunden.

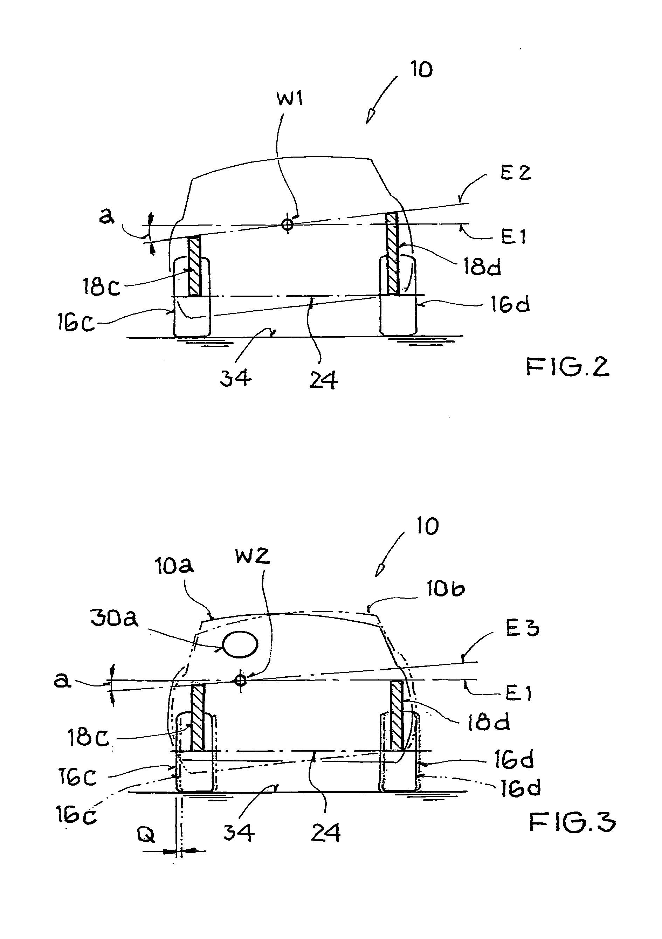

Fig. 2 zeigt eine schematische Rückansicht eines Kraftwagens 10 mit einer Wanksteuerung nach dem Stand der Technik. Der Kraftwagen 10 fährt im Ausführungsbeispiel eine Linkskurve. Um den Fahrkomfort für die Insassen des Kraftwagens 10 zu erhöhen, werden die Vertikalaktoren 18a bis 18d so angesteuert, dass sich die Karosserie des Kraftwagens 10 in die Linkskurve neigt. Die Neigung erfolgt durch eine Drehung um die Wankachse W1. Diese verläuft parallel zu einer Fahrbahn 34 mittig durch den Kraftwagen 10. Bei Geradeausfahrt wirken keine Querkräfte auf den Kraftwagen 10, so dass seine Karosserie im Wesentlichen parallel zu einer Ebene E1 verläuft. Im Fall der Linkskurve wird nun die Karosserie über die Vertikalaktoren 18a bis 18d aktiv um einen Wankwinkel a geneigt. Die Karosserie verläuft im Wesentlichen parallel zu einer Ebene E2, die jedoch nicht mehr parallel zur Fahrbahn 34 verläuft. Die Ebene E2 schließt dann den Wankwinkel a mit der Ebene E1 ein.

Um den subjektiven Fahrkomfort für den Fahrer 30 zu erhöhen, wird die Wankachse W1 so verschoben, dass sie unter dem Kopf 30a des Fahrers zu liegen kommt. Der Kopf 30a des Fahrers und die Wankachse W2 liegen dann oberhalb der Fahrbahn 34 im Wesentlichen übereinander. Um das Verschieben der Wankachse W1 zu erreichen, wird sowohl eine Neigebewegung als auch eine Querbewegung des Kraftwagens 10 eingeleitet. Die zugehörige Ausgangs- und Endsituation ist dabei in Fig. 3 dargestellt. Vor Einfahren in die Linkskurve hat der Kraftwagen eine der Darstellung 10a entsprechende Ausrichtung, wobei die Karosserie im Wesentlichen parallel zur Fahrbahn 34 verläuft. Wie an sich bekannt, erfolgt nun bei Einfahren in die Linkskurve ein Neigen des Kraftwagens um den Wankwinkel a, so wie dies im Teilbild dargestellt ist, das zum Kraftwagen 10b gehört. Die Ebene E3 verläuft dabei im Wesentlichen parallel zur Karosserie des Kraftwagens 10b und schließt mit einer Ebene E1, welche parallel zur Fahrbahn 34 verläuft, den Wankwinkel a ein.

Zusätzlich erfolgt nun jedoch ein Querausgleich, indem der Kraftwagen 10b um die Querablage Q gegenüber der ursprünglichen Position des Kraftwagens 10a querversetzt wird. Hierdurch wird die Wankachse W2 so verschoben, dass sie unterhalb des Kopfes 30a des Fahrers 30 zu liegen kommt. Die Wankbewegung ist dann mit einer geringeren Bewegung des Fahrers 30 verknüpft, so dass sich für diesen das subjektive Fahrempfinden verbessert. Durch das erreichte Sich-in-die-Kurve-Legen ist die vom Fahrer empfundene Querbeschleunigung verbessert.

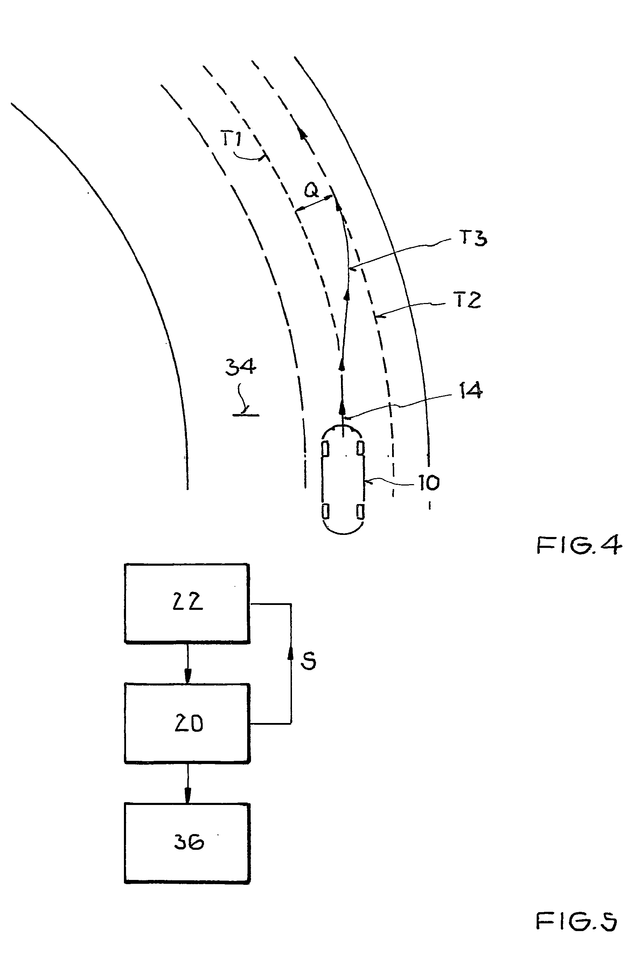

Fig. 4 zeigt schematisch, wie die Querablage Q über eine Querbewegung des Kraftwagens 10 auf einer Trajektorie T3 eingenommen wird. Der Kraftwagen 10 bewegt sich ursprünglich auf der Fahrbahn 34 in einer Linkskurve entlang einer Trajektorie T1. Zum Einstellen der räumlichen Lage der Wankachse W2 wirkt nun die Steuereinheit 22 aktiv auf den Lenkaktor 28 ein, so dass eine automatische Lenkbewegung des Kraftwagens 10 erfolgt. Der Kurvenradius wird erhöht, so dass der Kraftwagen nun auf einer Trajektorie T2 fährt, welche parallel zur Trajektorie T1 verläuft. Der Abstand der beiden Trajektorien T1 und T2 gibt die Querablage Q. Während der Kraftwagen 10 sich in die Linkskurve neigt und dabei gleichzeitig der Trajektorie T3 folgt, verschiebt sich die Wankachse effektiv so, dass sie in der Position für die Wankachse W2 zu liegen kommt.

Um den Wankwinkel a einzustellen, erfasst die Steuereinheit 22 Signale des Sensors 32 und ermittelt aus diesen die Querbeschleunigung. In Abhängigkeit vom jeweiligen Wert der Querbeschleunigung bestimmt die Steuereinheit nun eine geeignete Querneigung mit dem Wankwinkel a und eine geeignete Querablage Q. Die Querneigung wird dadurch eingestellt, dass die Steuereinheit 22 Signale an die ABC-Steuereinheit 20 weitergibt, wobei letztere wiederum den jeweiligen Hub der einzelnen Vertikalaktoren 18a bis 18d steuert. Die Querablage Q wird andererseits dadurch eingestellt, dass die Steuereinheit 22 entsprechende Signale an den Lenkaktor liefert, der in die Lenkung 26 so eingreift, dass ein bestimmter Radlenkwinkel für die Räder 16a und 16b vorgegeben wird.

Fig. 5 veranschaulicht die einzelnen Verfahrensschritte sowie das Zusammenwirken der jeweiligen Steuereinheiten. Die Steuereinheit 22 dient insbesondere auch einer teilautomatischen oder vollautomatischen Fahrzeugführung und erlaubt die Bestimmung der Querbeschleunigung des Kraftwagens 10. Die Steuereinheit 22 legt auf Basis der Querbeschleunigung eine Sollquerneigung sowie eine Sollquerablage des Kraftwagens fest. Die Sollquerneigung wird an die ABC-Steuereinheit 20 weitergeleitet, welche dann die jeweilige Querneigung über die ABC-Aktorik 36 einstellt. Die ABC-Aktorik 36 umfasst hierbei insbesondere die Vertikalaktoren 18a bis 18d. Zusätzlich wird nun eine Rückführung S vorgesehen, bei der eine notwendige Querablage Q oder ein Querablagenverlauf an die Steuereinheit 22 für die autonome Fahrzeugführung zurückgemeldet wird. Die jeweils momentane Querneigung legt also insbesondere die Querablage fest. In diesem Ausführungsbeispiel ist also die Querablage abhängig von der aktuellen Neigung.

## Patentansprüche

1. Verfahren zum Einstellen der räumlichen Lage der Wankachse (W1, W2) eines Kraftwagens (10, 10a, 10b) mit den folgenden Schritten:
a) Vorgeben einer räumlichen Solllage der Wankachse (W2);
b) Bestimmen einer Querbeschleunigung des Kraftwagens (10, 10a, 10b);
c) Festlegen einer Sollquerneigung (a) des Kraftwagens (10, 10a, 10b) und Ermitteln einer Sollquerablage (Q) des Kraftwagens (10, 10a, 10b) in Abhängigkeit von der Querbeschleunigung, so dass bei Einstellen von Sollquerneigung (a) und Sollquerablage (Q) eine Verlagerung der Wankachse in die Solllage (W2) bewirkt wird;
d) Einstellen wenigstens eines Aktors (18a, 18b, 18c, 18d) einer aktiven Fahrwerksvorrichtung (20) des Kraftwagens (10, 10a, 10b), so dass der Kraftwagen (10, 10a, 10b) die in Schritt c) ermittelte Sollquerneigung (a) einnimmt und Einstellen wenigstens eines Aktors (28) zum Beeinflussen der Querbewegung des Kraftwagens (10, 10a, 10b), so dass der Kraftwagen (10, 10a, 10b) die in Schritt c) ermittelte Sollquerablage (Q) einnimmt.

2. Verfahren nach Anspruch 1,
**dadurch gekennzeichnet, dass**
in Schritt d) das Einstellen der Querbewegung des Kraftwagens (10, 10a, 10b) über einen Eingriff in eine Lenkvorrichtung (26) des Kraftwagens (10, 10a, 10b) erfolgt.

3. Verfahren nach Anspruch 1 oder 2,
**dadurch gekennzeichnet, dass**
die in Schritt a) vorgegebene Solllage der Wankachse (W2) zumindest abschnittsweise in einen Bereich (30) fällt, der von einem Fahrzeugführer zum Führen des Fahrzeugs (10, 10a, 10b) eingenommen wird.

4. Verfahren nach einem der vorhergehenden Ansprüche,
**dadurch gekennzeichnet, dass**
die in Schritt a) vorgegebene Solllage der Wankachse (W2) zumindest abschnittsweise von einer Fahrbahn (34) weiter entfernt liegt als die Lage der Wankachse (W1) im Ruhezustand des Kraftwagens (10a).

5. Verfahren nach einem der vorhergehenden Ansprüche,
**dadurch gekennzeichnet, dass**
in Schritt b) eine zukünftige Querbeschleunigung des Kraftwagens (10, 10a, 10b) über eine Vorrichtung (22) zur automatischen Streckenvorausschau bestimmt wird und in Schritt c) die Sollquerneigung (a) und die Sollquerablage (Q) des Kraftwagens (10, 10a, 10b) über die Vorrichtung (22) zur automatischen Streckenvorausschau festgelegt wird.

6. Verfahren nach Anspruch 5,
**dadurch gekennzeichnet, dass**
die Vorrichtung (22) zur automatischen Streckenvorausschau die zukünftige Querbeschleunigung anhand einer Geschwindigkeit des Kraftwagens (10, 10a, 10b) und/oder anhand von Daten zum Fahrbahnverlauf und/oder anhand von Daten zur Fahrbahnneigung und/oder anhand einer Funktion für eine vorausschauende Längs- und Querführung bestimmt.

7. Verfahren nach einem der vorhergehenden Ansprüche,
**dadurch gekennzeichnet, dass**
in Schritt b) für das Bestimmen der Querbeschleunigung ein Signal wenigstens eines Sensors (32) herangezogen wird.

8. Verfahren nach einem der vorhergehenden Ansprüche,
**dadurch gekennzeichnet, dass**
in Schritt d) der wenigstens eine Aktor (18a, 18b, 18c, 18d) zum Beeinflussen der Querneigung (a) des Kraftwagens (10, 10a ,10b) in einem aktiven Federungssystem oder in einem aktiven Stabilisator bereitgestellt wird.

9. Verfahren nach einem der vorhergehenden Ansprüche,
**dadurch gekennzeichnet, dass**
es im Rahmen einer automatischen, insbesondere vollautomatischen Fahrzeugführung ausgeführt wird.

10. Verfahren nach einem der vorhergehenden Ansprüche,
**dadurch gekennzeichnet, dass**
in Schritt a) das Vorgeben der Solllage der Wankachse (W2) in Abhängigkeit von der Anzahl und/oder von der räumlichen Position von zumindest einer Person im Kraftwagen (10, 10a, 10b) erfolgt.

## Claims

1. Method for adjusting the spatial position of the roll axis (W1, W2) of a motor vehicle (10, 10a, 10b) with the following steps:
a) predetermining a spatial target position of the roll axis (W2);
b) determining a transverse acceleration of the motor vehicle (10, 10a, 10b);
c) specifying a target lateral sway (a) of the motor vehicle (10, 10a, 10b) and determining a target lateral deviation (Q) of the motor vehicle (10, 10a, 10b) depending on the transverse acceleration, so that on adjusting the target lateral sway (a) and target lateral deviation (Q) a displacement of the roll axis to the target position (W2) is effected;
d) adjusting at least one actuator (18a, 18b, 18c, 18d) of an active chassis device (20) of the motor vehicle (10, 10a, 10b) so that the motor vehicle (10, 10a, 10b) adopts the target lateral sway (a) determined in step c) and adjusting at least one actuator (28) to influence the transverse movement of the motor vehicle (10, 10a, 10b) so that of the motor vehicle (10, 10a, 10b) adopts the target lateral deviation (Q) determined in step c).

2. Method according to claim 1, **characterised in that** in step d) the adjustment of the transverse movement of the motor vehicle (10, 10a, 10b) is carried out by an intervention in a steering device (26) of the motor vehicle (10, 10a, 10b).

3. Method according to claim 1 or 2, **characterised in that** the target position of the roll axis (W2) predetermined in step a) falls at least in some sections in a region (30) that is adopted by a driver to drive the motor vehicle (10, 10a, 10b).

4. Method according to one of the preceding claims, **characterised in that** the target position of the roll axis (W2) predetermined in step a) lies at least in some sections further away from a carriageway (34) than the position of the roll axis (W1) in the rest state of the motor vehicle (10a).

5. Method according to one of the preceding claims, **characterised in that** in step b) a future transverse acceleration of the motor vehicle (10, 10a, 10b) is determined by a device (22) for the automatic preview of the route, and in step c) the target lateral sway a) and the target lateral deviation (Q) of the motor vehicle (10, 10a, 10b) is fixed by the device (22) for the automatic preview of the route.

6. Method according to claim 5, **characterised in that** the device (22) for the automatic preview of the route determines the future transverse acceleration on the basis of a velocity of the motor vehicle (10, 10a, 10b) and/or on the basis of data on the carriageway condition and/or on the basis of data on the carriageway gradient and/or on the basis of a function for a prospective longitudinal and transverse guidance.

7. Method according to one of the preceding claims, **characterised in that** in step b) a signal from at least one sensor (32) is used to determine the transverse acceleration.

8. Method according to one of the preceding claims, **characterised in that** in step d) the at least one actuator (18a, 18b, 18c, 18d) for influencing the lateral sway (a) of the motor vehicle (10, 10a, 10b) is provided in an active suspension system or in an active stabiliser.

9. Method according to one of the preceding claims, **characterised in that** it is executed in the framework of an automatic, in particular fully automatic, vehicle guidance.

10. Method according to one of the preceding claims, **characterised in that** in step a) the predetermination of the target position of the roll axis (W2) is carried out depending on the number and/or the spatial position of at least one person in the motor vehicle (10, 10a, 10b).

## Revendications

1. Procédé de réglage de la position spatiale de l'axe de roulis (W1, W2) d'un véhicule automobile (10, 10a, 10b) avec les étapes suivantes :
a) prescription d'une position spatiale de consigne de l'axe de roulis (W2) ;
b) détermination d'une accélération transversale du véhicule automobile (10, 10a, 10b) ;
c) spécification d'une inclinaison transversale de consigne (a) du véhicule automobile (10, 10a, 10b) et détermination d'une dérive transversale de consigne (Q) du véhicule automobile (10, 10a, 10b) en fonction de l'accélération transversale de telle sorte que, lors du réglage de l'inclinaison transversale de consigne (a) et de la dérive transversale de consigne (Q), un déplacement de l'axe de roulis dans la position de consigne (W2) est provoqué ;
d) réglage d'au moins un actionneur (18a, 18b, 18c, 18d) d'un système de châssis actif (20) du véhicule automobile (10, 10a, 10b) de telle sorte que le véhicule automobile (10, 10a, 10b) prend l'inclinaison transversale de consigne (a) déterminée à l'étape c) et réglage d'au moins un actionneur (28) destiné à influencer le mouvement transversal du véhicule automobile (10, 10a, 10b) de telle sorte que le véhicule automobile (10, 10a, 10b) prend la dérive transversale de consigne (Q) déterminée à l'étape c).

2. Procédé selon la revendication 1, **caractérisé en ce que**, à l'étape d), le réglage du mouvement transversal du véhicule automobile (10, 10a, 10b) s'effectue par l'intermédiaire d'une intervention dans un système de direction (26) du véhicule automobile (10, 10a, 10b).

3. Procédé selon la revendication 1 ou 2, **caractérisé en ce que** la position de consigne, prescrite à l'étape a), de l'axe de roulis (W2) tombe au moins par endroits dans une zone (30) qui est prise par un conducteur de véhicule pour conduire le véhicule automobile (10, 10a, 10b).

4. Procédé selon l'une des revendications précédentes, **caractérisé en ce que** la position de consigne, prescrite à l'étape a), de l'axe de roulis (W2) se trouve, au moins par endroits, plus éloignée d'une chaussée (34) que la position de l'axe de roulis (W1) à l'état de repos du véhicule automobile (10a).

5. Procédé selon l'une des revendications précédentes, **caractérisé en ce que**, à l'étape b), une accélération transversale future du véhicule automobile (10, 10a, 10b) est déterminée par l'intermédiaire d'un dispositif (22) pour la prévision automatique de trajectoire et, à l'étape c), l'inclinaison transversale de consigne (a) et la dérive transversale de consigne (Q) du véhicule automobile (10, 10a, 10b) sont spécifiées par l'intermédiaire du dispositif (22) pour la prévision automatique de trajectoire.

6. Procédé selon la revendication 5, **caractérisé en ce que** le dispositif (22) pour la prévision automatique de trajectoire détermine l'accélération transversale future à l'aide d'une vitesse du véhicule automobile (10, 10a, 10b) et/ou à l'aide de données concernant l'allure de la chaussée et/ou à l'aide de données concernant l'inclinaison de la chaussée et/ou à l'aide d'une fonction pour un guidage longitudinal et transversal prévisionnel.

7. Procédé selon l'une des revendications précédentes, **caractérisé en ce que**, à l'étape b), un signal d'au moins un capteur (32) est exploité pour la détermination de l'accélération transversale.

8. Procédé selon l'une des revendications précédentes, **caractérisé en ce que**, à l'étape d), l'au moins un actionneur (18a, 18b, 18c, 18d) destiné à influencer l'inclinaison transversale (a) du véhicule automobile (10, 10a, 10b) est prévu dans un système amortisseur actif ou dans un stabilisateur actif.

9. Procédé selon l'une des revendications précédentes, **caractérisé en ce qu'**il est mis en oeuvre dans le cadre d'un guidage de véhicule automatique, notamment entièrement automatique.

10. Procédé selon l'une des revendications précédentes, **caractérisé en ce que**, à l'étape a), la prescription de la position de consigne de l'axe de roulis (W2) s'effectue en fonction du nombre et/ou de la position spatiale d'au moins une personne dans le véhicule automobile (10, 10a, 10b).
